# EUROPÄISCHE PATENTSCHRIFT

(11) **EP 1 466 790 B1**
(45) Veröffentlichungstag und Bekanntmachung des Hinweises auf die Patenterteilung: **14.12.2005**
(21) Anmeldenummer: 04008381.8
(22) Anmeldetag: 07.04.2004
(51) Int. Cl.: B60R 21/01

(54) **Aufprall-Sensorvorrichtung**
Collision sensor device
Dispositif de capteur d'impact

(30) Priorität: 09.04.2003 DE 10316480; 22.12.2003 DE 10361078
(43) Veröffentlichungstag der Anmeldung: 13.10.2004
(73) Patentinhaber: Conti Temic microelectronic GmbH, 90411 Nürnberg (DE)
(72) Erfinder: Reisacher, Günther, 85051 Ingolstadt (DE); Roth, Gerhard, 90584 Allersberg (DE); Weichenberger, Lothar, 86669 Klingsmoos (DE); Beuschel, Michael, 85134 Stammham (DE); Helldörfer, Reinhard, 91083 Baiersdorf (DE); Fendt, Günter, 86529 Schrobenhausen (DE)

(56) Entgegenhaltungen:
- DE-A- 3 716 168
- DE-A- 10 026 330
- DE-A- 10 100 881
- DE-A- 10 123 627

## Beschreibung

Die vorliegende Erfindung betrifft eine Aufprall-Sensorvorrichtung nach dem Oberbegriff von Anspruch 1.

Eine derartige Aufprall-Sensorvorrichtung ist aus der gattungsbildenden DE 101 00 881 A bekannt.

Gesetzliche Anforderungen werden in Zukunft dazu führen, dass in Kraftfahrzeugen vermehrt Fußgängerschutzsysteme eingesetzt werden. Derartige Fußgängerschutzsysteme befinden sich in unterschiedlichen Ausführungsformen bereits in der Entwicklung. Im folgenden werden unter dem Begriff "Fußgänger" auch Verkehrsteilnehmer wie Radfahrer oder Kinderwagen verstanden, kurz alle im Vergleich zu einem Kraftfahrzeug schwächeren Verkehrsteilnehmer. Ein "Fußgängerschutzsystem" ist daher zum Schutz der Verkehrsteilnehmer vorgesehen, die bei einem Zusammenstoß mit einem Fahrzeug ein großen Schaden, insbesondere am eigenen Körper erleiden aufgrund nicht vorhandener eigener Schutzvorrichtungen.

Hinsichtlich der einzelnen Ausführungsformen der Fußgängerschutzsysteme wird zwischen Aktuatorik und Sensorik unterschieden. Bei Aktuatoren handelt es sich um "ausführende Einheiten", welche für die Schutzfunktion verantwortlich sind. Hierbei kann es sich beispielsweise um verstellbare Motorhauben, Airbags im vorderen Außenbereich eines Fahrzeugs, insbesondere im Bereich der Motorhaube, und dergleichen im Falle eines Fußgängerunfalls aktivierbare Einheiten handeln.

Bevor jedoch mit einem Aktuator eine Schutzwirkung eingeleitet werden kann, muss eine Kollision mit einem Fußgänger mittels einer entsprechenden Sensorik erfasst werden, um entsprechende Steuersignale für den Aktuator bilden zu können. Da ein Fußgänger im Gegensatz zu einem Fahrzeug, insbesondere einem Kraftfahrzeug in der Regel eine wesentlich kleinere Masse besitzt, ist eine sehr empfindliche Sensorik erforderlich, um einen Zusammenstoss zwischen Fußgänger und Fahrzeug zu detektieren, insbesondere um eine kurze Auslösezeit für ein Schutzmittel wie z.B. einen Airbag zu erzielen.

Aus diesem Grunde werden für Fußgängerschutzsysteme häufig optische Pre-Crash-Systeme oder sehr empfindliche "Upfrontsensoren" eingesetzt, die an einem Fahrzeug möglichst weit vorne wie beispielsweise in der Stoßstange angeordnet sind. Solche Systeme bzw. Sensoren dienen vor allem dazu, einen potentiellen Aufprall eines Fußgängers bereits "im Vorfeld" an ein Steuergerät zu kommunizieren, welches die Aktivierung eines Aktuators wie beispielsweise eines Airbags im Außenbereich eines Fahrzeugs steuert.

Aus der DE 198 17 334 C1 ist ein Pre-Crash-System zur Anpassung der Auslöseschwelle einer Insassenschutzeinrichtung bekannt, bei dem mittels eines Lichtleiters in der Stoßstange, der als faseroptischer Belastungssensor eingesetzt wird, eine Sensierung des vorderen Fahrzeugbereiches vorgenommen wird. Ein ähnliches System, welches auf Lichtleitertechnik basiert, ist aus der DE 197 45 309 A1 bekannt. Weitere auf Lichtleitern basierende Aufprallsensoren oder Insassenschutzsysteme sind beispielsweise aus der DE 44 45 999 A1 und DE 37 16 168 A1 bekannt. Bei diesen bekannten Systemen beruht die Sensierung (Signalerfassung) auf dem Prinzip, dass eine Kraft- oder Druckeinwirkung auf das Sensorelement, hier einen Lichtleiter, dessen Strahlengang und damit Lichtdurchlässigkeit verändert. Die Veränderung der Lichtdurchlässigkeit wird gemessen und zur Sensierung eines Aufpralls ausgewertet.

Für eine ordnungsgemäße Funktion ist jedoch erforderlich, dass die Stoßstange oder Stoßstangenanordnung mit der Halterung für das Sensorelement einen Verformungsbereich aufweist, damit die zu erwartende Krafteinwirkung im Stoßstangenbereich auch von dem Sensorelement erfasst werden kann bzw. die zu sensierende Krafteinwirkung aufgrund des Verformungsbereiches auf das Sensorelement entsprechend einwirken kann.

Ein Nachteil dieser auf Lichtwellenleitern basierten Systeme ist darin zu sehen, dass der mechanische Aufbau eine gewisse Störempfindlichkeit gegenüber Umwelteinflüssen bedingt. Diese gegenüber auf anderen Prinzipien basierenden Messsystemen erhöhte Störempfindlichkeit ist unter anderem darin begründet, dass der mechanisch empfindliche Lichtwellenleiter des Systems relativ nahe an der Fahrzeugaußenhaut angeordnet sein muss bzw. sich im verformbaren Bereich der Stoßstange befindet, wo er Umwelteinflüssen, z.B. sehr niedrigen Außentemperaturen im Winter, Feuchtigkeit bei Regen und dergleichen auf die Messgenauigkeit wirkende Einflüssen unmittelbar ausgesetzt ist. Ein weiteres Problem stellen die hohen Fertigungstoleranzen der Lichtwellenleiter-Einbettung und die Verluste an Koppelstellen des Lichtwellenleiters (LW-Steckerübergänge) dar.

Auch bauteilebedingte Toleranzen, wie Alterungseffekte und Temperatureinflüsse, der gesamten optischen Übertragungsstrecke, die eine optische Sendeeinheit aus einer LED oder LD (Laserdiode), eine optische Empfangseinheit (Photodiode) und einen Lichtwellenleiter (LWL) umfasst, erfordern eine sehr große Bandbreite hinsichtlich des Dynamikbereiches einer Auswerteeinheit, damit der Ruhearbeitspunkt des gesamten Messsystems auch bei Störeinflüssen innerhalb der im Messsystem zur Verfügung stehenden Bandbreite liegt. Dies gilt im Übrigen auch für eine ohmschen Widerstand oder eine Widerstandsanordnung als Übertragungselement oder andere kraft- oder druckempfindliche Sensoren.

Ein möglicher Störeinfluss kann beispielsweise durch ein geringfügiges Anstoßen an ein Hindernis beim Einparken mit einem Kraftfahrzeug "(Parkrempler") bewirkt werden. Eine dadurch hervorgerufene leichte Veränderung der Stoßstange bringt eine dauerhafte mechanische Kraft auf den darin befindlichen Lichtleiter auf und übt somit einen Einfluss auf die statische Lichtdurchlässigkeit aus, wodurch sich der statische Arbeitspunkt des gesamten Sensorsystems ändern kann.

Ein aus der großen erforderlichen Bandbreite resultierender weiterer Nachteil der bekannten Systeme besteht darin, dass die Auflösung der Nutzsignalanteile nur mit einer begrenzten Auflösungsgenauigkeit erfolgen kann, da das Nutzsignal gegenüber dem vorzuhaltenden Dynamikbereich nur einen geringen Ausschnitt des gesamten Dynamikbereichs umfasst.

Aufgabe der vorliegenden Erfindung ist es nun, eine Aufprall-Sensorvorrichtung und ein Verfahren zum Einstellen einer Aufprall-Sensorvorrichtung vorzuschlagen, die eine geringere Empfindlichkeit gegenüber Störeinflüssen als die eingangs geschilderten und bekannten Aufprall-Sensorvorrichtungen aufweisen.

Diese Aufgabe wird durch eine Aufprall-Sensorvorrichtung mit den Merkmalen von Anspruch 1 gelöst. Vorteilhafte Weiterbildungen der Erfindung ergeben sind aus den Unteransprüchen.

Ein wesentlicher Gedanke der Erfindung besteht darin, den sich bei einer Aufprall-Sensorvorrichtung in der Regel ergebenden Widerspruch zwischen hohen Toleranzen und Störeinflüssen einerseits und hohen Anforderungen an Empfindlichkeit und Dynamik andererseits durch eine Regelung zum Einstellen eines insbesondere statischen oder quasi-statischen Arbeitspunktes der Aufprall-Sensorvorrichtung zu umgehen. Durch eine derartige Regelung kann die Empfindlichkeit der Aufprall-Sensorvorrichtung gegenüber Störungen wesentlich verringert werden.

Die Erfindung betrifft eine Aufprall-Sensorvorrichtung mit einem kraft- oder druckempfindlichen Aufprall-Sensor und einer Verarbeitungseinrichtung , die Ansteuermittel für den Aufprall-Sensor und Verarbeitungsmittel für ein Signal des Aufprall-Sensors aufweist. Die Verarbeitungseinrichtung weist ferner eine Regelung zum Einstellen des statischen Arbeitspunktes der Aufprall-Sensorvorrichtung auf. Dadurch wird eine Verbesserung der Auflösung von Nutzsignalanteilen in einem vorzuhaltenden Dynamikbereich des Aufprall-Sensors erzielt, wodurch auch Störeinflüsse eine wesentlich geringere Auswirkung auf die Sensierung besitzen. Unter dem vorzuhaltenden Dynamikbereich ist hier der durch die Aufprall-Sensorvorrichtung "abzubildende" oder "darzustellende" Bereich und die zu berücksichtigenden Einflussfaktoren, die im Auflösungsbereich der Verarbeitungseinrichtung zu berücksichtigen sind, zu verstehen.

Die Regelung kann derart ausgebildet sein, dass der statische Arbeitspunkt mindestens einem in der Regelung implementierten Soll-Arbeitspunkt insbesondere kontinuierlich nachgeführt wird.

Vorzugsweise liegt der mindestens eine Soll-Arbeitspunkt bei etwa 70% bis etwa 90% eines möglichen Aussteuerbereichs der Verarbeitungseinrichtung.

In einer besonders bevorzugten Ausführungsform umfasst der Aufprall-Sensor einen Lichtwellenleiter und umfassen die Ansteuermittel eine Lichtquelle, insbesondere eine Leucht- oder Laserdiode, und eine einstellbare Stromquelle zum Speisen der Lichtquelle sowie die Verarbeitungsmittel eine Photodiode.

Die Verarbeitungseinrichtung weist vorzugsweise eine Signalaufbereitungsschaltung zum Verarbeiten des Ausgangssignals der Photodiode und davon abhängigen Erzeugen eines Regelsignals auf, wobei die Signalaufbereitungsschaltung derart ausgebildet ist, dass sie ein Regelsignal zum Steuern der einstellbaren Stromquelle abhängig vom mindestens einen Soll-Arbeitspunkt erzeugen kann. Die Signalaufbereitungsschaltung kann digital oder zumindest teilweise digital implementiert sein, vorzugsweise durch einen Mikroprozessor mit einem an die erfindungsgemäße Funktionalität angepassten Programm.

Die Signalaufbereitungsschaltung ist insbesondere derart ausgebildet, dass sie das Ausgangssignal der Photodiode mittelt, um die empfangene Lichtleistung zu ermitteln, und gemäß einer vorgegebenen Kennlinienfunktion das Regelsignal erzeugt. Die Kennlinienfunktion kann beispielsweise in einem Mikroprozessor implementiert sein, welche die Signalaufbereitungsschaltung bildet.

Die Verarbeitungseinrichtung kann auch derart ausgebildet sein, dass sie die Sendeleistung der Lichtquelle, den Verstärkungsfaktor eines Verstärkers für den Photodiodenstrom und/oder den Verstärkungsfaktor einer Signalaufbereitungsschaltung abhängig von der Übertragungsgüte des Aufprall-Sensors einstellt. Diese Funktionalität kann ebenfalls durch einen mittels eines Programms entsprechend angepassten Mikroprozessor implementiert werden.

Die Regelung des Einstellens des Arbeitspunktes kann mit einer Frequenz betrieben werden, die niedriger ist als die Frequenz des Signals des Aufprall-Sensors.

Alternativ kann die Regelung des Einstellens des Arbeitspunktes auch mit einer Frequenz betrieben werden, die höher ist als die Frequenz des Signals des Aufprall-Sensors, um die Signalgröße anhand der Regelgröße ableiten zu können.

Schließlich kann die Regelung des Einstellens des Arbeitspunktes zu vorgegebenen Zeitpunkten und/oder kontinuierlich während des Betriebs erfolgen. Beispielsweise erfolgt die Regelung bei einer digitalen Implementierung zu vorgegebenen Abtastzeitpunkten. Bei einer Regelfrequenz, die größer als die Signalfrequenz ist, sollte dagegen eine dauernde Regelung erfolgen.

Die vorgegebenen Zeitpunkte liegen vorzugsweise in einem Zeitraum, in dem ein Selbsttest der Aufprall-Sensorvorrichtung stattfindet. Hierdurch kann vermieden werden, dass der laufende Sensierungsbetrieb durch die Regelung beeinträchtig wird. Andererseits können auch während des Selbsttests grobe Toleranzen durch die "diskrete" Regelung zu vorgegebenen Zeitpunkten und feine temperaturabhängige Drifts im zyklischen Regelungsbetrieb nach dem Selbsttest korrigiert werden.

Die Regelung implementiert ferner eine dynamische Dynamik-Funktionsüberprüfung der Aufprall-Sensorvorrichtung. Unter einer derartigen Funktionsüberprüfung wird insbesondere eine Überprüfung des Dynamikverhaltens der gesamten Aufprall-Sensorvorrichtung und insbesondere der Regelung verstanden.

Die dynamische Dynamik-Funktionsüberprüfung ist durch eine vorgegebene Steuerung des mindestens einen in der Regelung implementierten Soll-Arbeitspunktes innerhalb von Grenzwerten eines vorgegebenen Dynamikbereichs implementiert. Beispielsweise können durch eine beabsichtigte Steuerung eines Ist-Arbeitspunktes alle (dynamisch überstreichend) oder spezifische innerhalb von zu erfüllenden Grenzwerten eines erforderlichen Dynamikbereiches liegende Arbeitspunkte aktiv angesteuert werden können. Dadurch kann geprüft werden, wie die Aufprall-Sensorvorrichtung bei diesen Arbeitspunkten arbeitet.

Insbesondere kann die vorgegebene Steuerung derart ausgebildet sein, dass der mindestens eine Soll-Arbeitspunkt auch über die Grenzwerte des erforderlichen Dynamikbereichs ausgesteuert werden kann. Diese Art der "Übersteuerung" erfolgt insbesondere aus Sicherheitsgründen, um auch noch einen Sicherheits- oder Reservebereich der Dynamikfähigkeit zu bei der Prüfung berücksichtigen.

Vorzugsweise sind in der Regelung Fehler-Grenzwerte implementiert und ist die Aufprall-Sensorvorrichtung derart ausgebildet, dass bei Überschreiten eines der implementierten Fehler-Grenzwerte durch die Regelung des statischen Arbeitspunktes eine Fehlermeldung erzeugt wird. Beispielsweise können die im Vorfeld festgelegten Fehler-Grenzwerte einen Regelstrombereich beschreiben, in dem sich der Nachregelstrom eines funktionierenden Aufprall-Sensors befinden muss.

Ferner betrifft die Erfindung ein Fußgängerschutzsystem für ein Fahrzeug, das mindestens ein in einem Außenbereich des Fahrzeugs wirkendes Schutzmittel und ein Steuergerät zum Ansteuern des mindestens einen Schutzmittels umfasst. Das System weist ferner eine Aufprall-Sensorvorrichtung nach der Erfindung auf, die mit dem Steuergerät kommunikationsmäßig verbunden ist.

Schließlich betrifft die Erfindung ein Fahrzeug, insbesondere einen Personen- oder Lastkraftwagen, mit einem derartigen Fußgängerschutzsystem.

Weitere Vorteile und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen, in der Zusammenfassung und in den Zeichnungen werden die in der hinten angeführten Liste der Bezugszeichen verwendeten Begriffe und zugeordneten Bezugszeichen verwendet. Die Zeichnungen zeigen in
- Fig. 1: eine Ausführungsform einer Aufprall-Sensorvorrichtung gemäß der vorliegenden Erfindung;
- Fig. 2: eine Detaildarstellung einer Ausführungsform einer Signalverarbeitungseinrichtung gemäß der vorliegenden Erfindung;
- Fig. 3: eine Detaildarstellung einer Ausführungsform einer Verarbeitungseinrichtung gemäß der vorliegenden Erfindung;
- Fig. 4: eine Funktionsdarstellung der Soll-Arbeitspunkt-Bestimmung bzw. Arbeitspunkt-Festlegung einer Aufprall-Sensorvorrichtung gemäß der Erfindung, sowie Erläuterungen der erfindungsgemäßen Verfahren zur Überprüfung oder zum Abgleich der Aufprall-Sensorvorrichtung;
- Fig. 5: eine Funktionsdarstellung der Übertragungsgüte bzw. des Übertragungsverhältnisses der Ausgangsgröße zur Eingangsgröße einer Aufprall-Sensorvorrichtung nach der Erfindung; und
- Fig. 6: eine Darstellung des erforderlichen Dynamikbereiches anhand der zu berücksichtigenden Größen im Aussteuerbereich, wobei eine Verbesserung der Auflösung der Nutzsignalanteile im vorzuhaltendem Dynamikbereich für die Übertragungsstrecke aufgrund der Regelung bei der erfindungsgemäßen Aufprall-Sensorvorrichtung verdeutlicht wird.

Im folgenden können gleiche und/oder funktional gleiche Elemente mit den gleichen Bezugszeichen versehen sein.

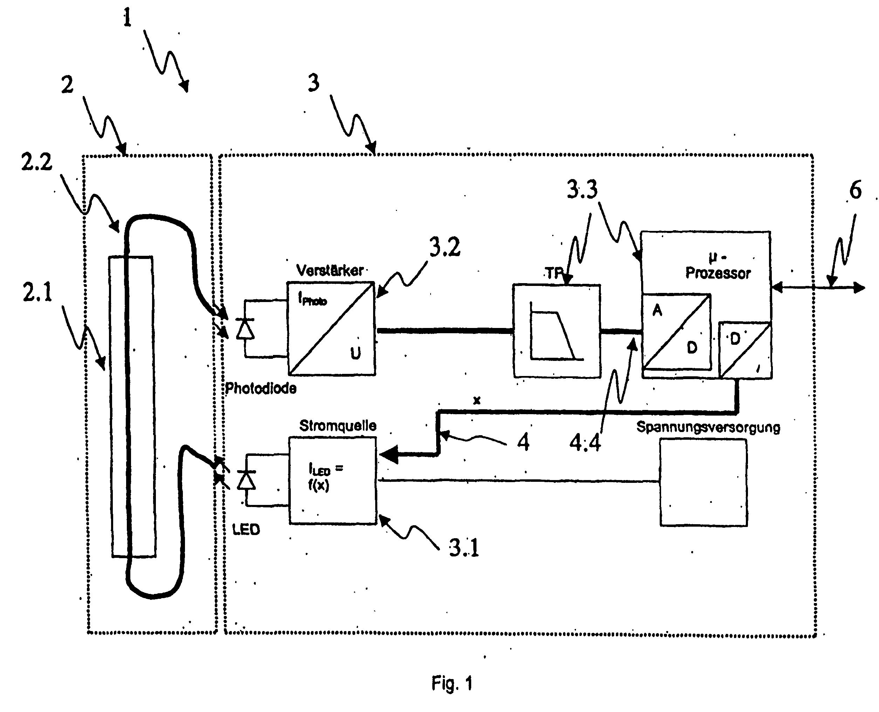

Fig. 1 zeigt eine Aufprall-Sensorvorrichtung für ein Fußgängerschutzsystem mit einem Aufprall-Sensor 2 und einer Verarbeitungseinrichtung 3 zur Auslösung und Unterstützung einer Auslöseentscheidung einer Kraftfahrzeug-Sicherheitseinrichtung.

Der Aufprall-Sensor 2 umfasst ein erstes Fahrzeugaußenhautteil 2.1, welches vorzugsweise als Stoßstange im Frontbereich oder als Außenleiste des Fahrzeuges ausgebildet ist, und ein kraft- / druckempfindliches zweites Teil 2.2 (Sensorelement), welches als Lichtwellenleiter ausgebildet ist. Alternativ kann das zweite Teil 2.2 auch als veränderliche(r) ohmscher Widerstand oder ohmsche Widerstandsanordnung ausgebildet sein. Das zweite Teil 2.2 steht in einer physikalischen Wechselwirkung mit dem ersten Teil 2.1. Die physikalische Wechselwirkung wird beispielsweise dadurch erreicht, dass das zweite Teil 2.2 in das erste Teil 2.1 ganz oder zumindest teilweise eingearbeitet ist, oder das zweite Teil 2.2 auf das erste Teil 2.1 mechanisch aufgebracht ist, oder ganz allgemein beide Teile in einer mechanischen Verbindung zueinander stehen.

Das erste Teil 2.1 ist derart am Fahrzeug als Fahrzeugaußenhautteil 2.1 angeordnet oder ausgebildet, dass es sich bei Aufbringung bzw. Einwirkung einer Kraft oder eines Druckes zumindest geringfügig ändern oder verformen kann, insbesondere hinsichtlich seiner Position. Eine derartige sich durch Aufbringung bzw. Einwirkung einer Kraft oder eines Druckes ergebende resultierende Positionsänderung bzw. geringfügige Verformung des ersten Teils 2.1 verändert die Übertragungseigenschaft des zweiten Teils 2.2. Bei der sich verändernden Übertragungseigenschaft kann es sich beispielweise bei einer Lichtleiteranordnung um die Lichtdurchlässigkeit oder bei einem ohmschen Widerstand oder einer Widerstandsanordnung um die Leitfähigkeit handeln.

Die Verarbeitungseinrichtung 3 umfasst eine Sendeeinheit 3.1, eine Empfangseinheit 3.2 und eine Signalaufbereitungsschaltung 3.3. Die Sendeeinheit 3.1 umfasst im Falle einer Lichtleiteranordnung eine Leuchtdiode (LED) (oder eine Laserdiode) und eine Stromquelle zur Ansteuerung der LED. Die LED der Sendeeinheit 3.1 speist Lichtleistung in den Lichtwellenleiter 2.2 ein. Die Empfangseinheit 3.2 empfängt die über den Lichtwellenleiter 2.2 übertragene Lichtleistung mittels einer Photodiode. Die von der Empfangseinheit 3.2 empfangene Lichtleistung ist aufgrund von Streulichtverlusten im Lichtleiter schwächer als die eingespeiste Lichtleistung. Dieses Dämpfungsverhalten der optischen Übertragungsstrecke des Aufprall-Sensors 2 beeinflusst die Übertragungseigenschaften und damit die Beziehung zwischen Ein- und Ausgangsgröße. Letztendlich stellt sie eine Kenngröße der Übertragungsgüte des Aufprall-Sensors 2 dar.

Die Photodiode in der Empfangseinheit 3.2 erzeugt einen Photostrom, dessen Stärke abhängig von der empfangenen Lichtleistung ist. Ein Verstärker verstärkt den Strom, der dann von einem Strom-/Spannungswandler in eine Spannung gewandelt wird. Diese Spannung wird zur weiteren Verarbeitung einer Signalaufbereitungsschaltung 3.3 zugeführt. Die Signalaufbereitungsschaltung umfasst einen Mikroprozessor mit einem A/D-Wandler und gegebenenfalls einen vorgeschalteten Tiefpass TP zur Glättung der Spannung. Der Mikroprozessor ist über eine Schnittstelle 6 mit einer nicht dargestellten Kraftfahrzeug-Sicherheitseinrichtung kommunikationsmäßig verbunden, um eine Auslöseentscheidung für ein Fußgängerschutzsystem und/oder eine Unterstützung für eine Auslöseentscheidung bereit zu stellen zu können.

Im Ruhefall, d.h. wenn keine dynamische Krafteinwirkung bzw. keine dynamische Druckbelastung auf das kraft- / druckempfindliche zweite Teil 2.2 vorliegt, weist die Aufprall-Sensorvorrichtung 1 einen sich quasi-statisch einstellenden oder vorliegenden statischen Arbeitspunkt 4.4 auf. Unter dynamischer Krafteinwirkung bzw. dynamischer Druckbelastung wird eine Einwirkung bzw. Belastung aufgrund eines Aufpralls eines Objekts wie eines Fußgängers auf das erste Teil 2.1 verstanden. Im statischen Arbeitspunkt ist die gesendete, übertragene und empfangene Lichtleistung etwa konstant. Aufgrund von Störeinflüssen wie dauerhafter Druck- oder Krafteinwirkungen aufgrund von Verformungen des ersten Teils 2.2 oder Temperatureinflüssen kann der statische Arbeitspunkt jedoch verschoben werden. Dadurch kann die Dynamik und Empfindlichkeit der Aufprall-Sensorvorrichtung beeinträchtigt werden. Um diese mögliche Beeinträchtigung zu umgehen, ist in der Verarbeitungseinrichtung 3 eine Regelung implementiert, die im folgenden erläutert wird.

Hinsichtlich der angewendeten begrifflichen Nomenklatur bzgl. des "sich quasi-statisch einstellenden oder vorliegenden statischen Arbeitspunktes 4.4" sei angemerkt, dass darunter der Sachverhalt zum Ausdruck gebracht werden soll, dass der Arbeitspunkt 4.4 der Übertragungsstrecke, der sich einstellen würde, sofern keine Nachregelung stattfindet, zeitlich betrachtet einen "vorliegenden statischen Arbeitspunkt" darstellt, bzw. sofern beispielsweise durch Temperatureinflüsse hervorgerufene Fehlereffekte einwirken, zeitlich betrachtet es sich dann um einen "quasi-statischen einstellenden Arbeitspunkt" handelt, da sich der Arbeitspunkt ohne Regelung bzw. Nachregelung langsam ändern würde, und somit nicht mehr rein statisch vorliegt. Sobald der Arbeitspunkt, mittels der Nachregelung, seinen gewünschten vordefinierten Soll-Arbeitspunkt (wieder) erreicht hat, nimmt dieser wieder einen statischen Zustand an.

Bei dem angeführten "sich quasi-statisch einstellenden , und/oder vorliegenden statischen Arbeitspunktes 4.4", kann es sich auch um eine Mehrzahl von Arbeitspunkten handeln, zwischen welchen umgeschaltet oder ausgewählt werden kann, insbesondere dann, wenn dies durch äußere Randbedingungen angezeigt wird.

Die Regelung wird insbesondere durch Einstellen der Sendeleistung der LED realisiert. Die Sendeleistung wird über den Versorgungsstrom der LED durch die einstellbare Stromquelle 3.1 vorgegeben. Dadurch wird für die Signalaufbereitungsschaltung 3.3 das dem sich quasi-statischen einstellenden oder momentan vorliegenden statischen Arbeitspunkt 4.4 überlagerte und auszuwertende Nutzsignal in Form des Ausgangsstromes der Photodiode auf einen definierten statischen Soll-Arbeitspunkt oder Soll-Größe 4.1 bzw. auf ein gewünschtes Niveau oder eine Sollgröße 4.1 geregelt.

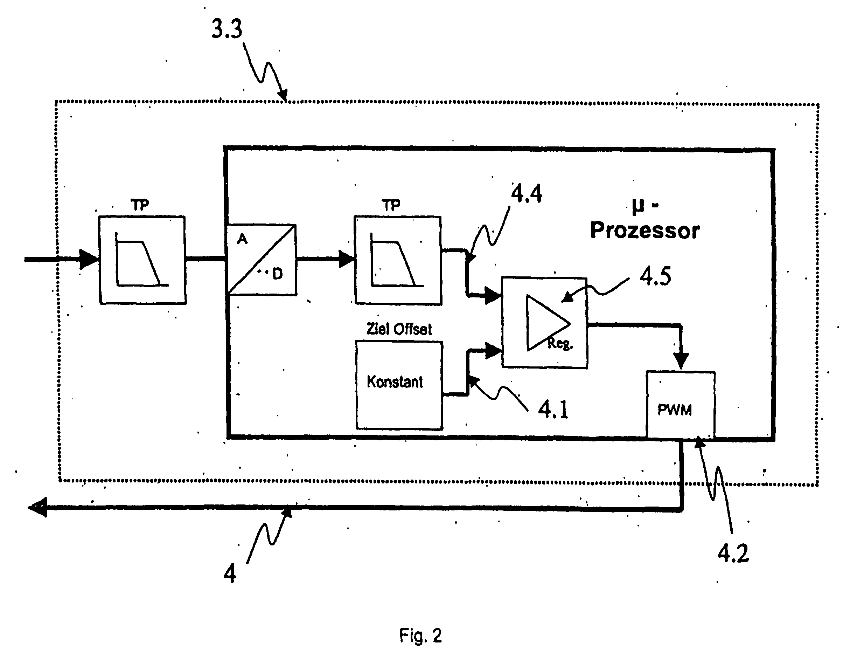

Die Regelungsmöglichkeit wird dadurch erreicht, dass mittels einem Regelsignal bzw. einer Stellgröße 4 die Sendeleistung der Sendeeinheit 3.1 gemäß einem gewünschtem Regelverhalten geregelt wird. Bei der Signalform des Regelsignals bzw. der Stellgröße 4 kann es sich hierbei beispielsweise um eine analoge Spannungsform, die von einem D/A-Wandler generiert wird, oder um eine digitale Spannungsform handeln, die von einer PWM-Ausgangsstufe 4.2 (Fig. 2) generiert und aus der in der Sendeeinheit 3.1 ein Mittelwert gebildet wird.

Um mit der Regelung des sich quasi-statisch einstellenden und/oder vorliegenden statischen Arbeitspunktes 4.4 der durch die Elemente 3.1, 2.2, 3.2 gebildeten Übertragungsstrecke in Richtung eines vordefinierten Soll-Arbeitspunktes 4.1 eine möglichst gute Aussteuerdynamik für das auszuwertende Nutzsignal zu erzeugen, wird der vordefinierte Soll-Arbeitspunkt des Aufprall-Sensors 2 mit der Verarbeitungseinrichtung 3 insbesondere derart gewählt, dass dieser bei ca. 70% bis 90% des möglichen Aussteuerbereichs und des aufzulösenden Darstellungsbereiches der Verarbeitungseinrichtung 3 liegt.

Die Regelung des sich quasi-statisch einstellenden und/oder vorliegenden statischen Arbeitspunktes 4.4 der Übertragungsstrecke 3.1, 2.2, 3.2 in Richtung eines vordefinierten Soll-Arbeitspunktes 4.1 ermöglicht eine Verbesserung der Auflösung der Nutzsignalanteile im vorzuhaltenden erforderlichen Dynamikbereich für die Übertragungsstrecke. Der Klarheit wegen sei hierbei erwähnt, dass unter dem Begriff "vorzuhaltender Dynamikbereich" der durch die Aufprall-Sensorvorrichtung 1 abzubildende oder darzustellende Bereich und die zu berücksichtigenden Einflussfaktoren zu verstehen sind, welche im zur Verfügung stehenden Auflösungsbereich (bei digitaler Signalverarbeitung z.B. 8-Bit) zu berücksichtigen sind.

Die kontinuierliche Nachführung des Arbeitspunktes 4.4 kann in einer analogen, einer gemischten analog-digitalen oder einer digitalen insbesondere µP-unterstützten Schaltungstechnik realisiert werden. Sofern es sich um eine analoge Realisierung handelt, kann der Einfachheit halber eine Ausführungsform mit einer klassischen kontinuierlichen Nachführung gewählt werden. Wird hingegen bei der Realisierung ein µP zum Einsatz gebracht, so reicht es auch aus, dass die kontinuierliche Nachführung des Arbeitspunktes nur zu bestimmten, d.h. zu vorgegebenen Zeitpunkten erfolgt. Bei den hierbei gewählten "Zeitpunkten" kann es sich sowohl um zyklisch sich wiederholende Zeitpunkte mit einem äquidistanten zeitlichem Abstand zueinander, die eine digitalisierte Kontinuität beschreiben, als auch um zeitlich differenzierende Abstände zueinander handeln.

Der exakte zeitliche Abstand der Nachregelpunkte ist insbesondere dann von untergeordneter Bedeutung, wenn sowohl bei einer analogen als auch bei einer digitalen Nachregelung die kontinuierliche Nachführung des Arbeitspunktes mit einer deutlich niedrigeren Regelfrequenz erfolgt als das zu erfassende Nutzsignal an Frequenzverhalten aufweist. Vereinfacht ausgedrückt bedeutet das, dass die Regelfrequenz niedriger als die Nutzsignal-Frequenz oder der Nutzsignal-Frequenzbereich ist. Ebenso ist es für die prinzipielle Funktion ausreichend, insbesondere dann, wenn es ausreichend ist, dass nur ein Großteil der möglichen Einflussgrößen eliminiert werden soll, da die dynamischen während des Betriebs auftretenden Einflussgrößen gering gegenüber den statischen beispielsweise durch sogenannte "Parkrempler" hervorgerufenen Fehlern sind, wenn sich die Nachregelung bzw. die zeitlich bestimmten Zeitpunkte der Nachregelung, sich jeweils auf die Selbsttestzeit des Aufprall-Sensors mit Verarbeitungseinrichtung beschränkt / begrenzen.

Neben der oben erwähnten Nachregelung des Arbeitspunktes, mit einer deutlich niedrigeren Regelfrequenz als das zu erfassende Nutzsignal an Frequenzverhalten aufweist, besteht bei einer anderen Art der Signalauswertung auch die Möglichkeit, dass die kontinuierliche Nachführung des sich quasi-statisch einstellenden und/oder vorliegenden statischen Arbeitspunktes mit einer deutlich höheren Regelfrequenz erfolgt, als das zu erfassende Nutzsignal an Frequenzverhalten aufweist. Mittels diesem Prinzip erfolgt die tatsächliche Nutzsignalauswertung nicht aufgrund der erfolgenden Abweichung (Amplitude) vom eingestellten Soll-Arbeitspunkt, sondern von der erforderlichen Nachstellgröße innerhalb eines definierten Zeitbereiches zusätzlich / abweichend zum Regelsignal ohne Nutzsignalanteile, um den eingestellten Soll-Arbeitspunkt bei Auftreten eines Nutzsignals konstant halten zu können. Die zusätzliche erforderliche / abweichende Regelsignalgröße kann als Maß für die einwirkende physikalische Größe herangezogen werden.

Ein weiterer Vorteil, der durch die kontinuierlichen Nachführung des sich quasi-statisch einstellenden und/oder vorliegende statischen Arbeitspunktes 4.4 der Übertragungsstrecke 3.1, 2.2, 3.2, in Richtung eines vordefinierten Soll-Arbeitspunktes 4.1, realisiert werden kann, ist darin zu sehen, dass damit eine dynamische Dynamik-Funktionsüberprüfung des Aufprall-Sensors 2 mit der Verarbeitungseinrichtung 3 ermöglicht wird.

Die dynamische Dynamik-Funktionsüberprüfung des Aufprall-Sensors 2 mit der Verarbeitungseinrichtung 3 erfolgt hierbei durch eine beabsichtigte Steuerung des Ist-Arbeitspunktes 4.4. Durch diese Steuerung können alle oder spezifische innerhalb den beiden zu erfüllenden Grenzwerten des erforderlichen oder abzubildenden Dynamikbereiches liegenden Arbeitspunkte aktiv angesteuert werden. Vorteilhafterweise wird bei dieser Überprüfung jedoch nicht nur der Bereich innerhalb der Arbeitspunkte im zu erfüllenden Dynamikbereiches abgeprüft. Darüber hinaus wird aus Sicherheitsgründen auch noch ein Sicherheitsbereich der Dynamikfähigkeit mitberücksichtigt, so dass die dynamische Dynamikbereich-Funktionsüberprüfung des Aufprall-Sensors 2 mit Verarbeitungseinrichtung 3 durch eine beabsichtigte Steuerung des Soll-Arbeitspunktes auch über die Grenzen des zu erfüllenden Dynamikbereiches hinaus in den Sicherheitsbereich erfolgt.

Im Zuge der dynamischen Dynamikbereich-Funktionsüberprüfung kann mittels der erforderlichen Sendeleistung geprüft werden, welche Sendeenergie erforderlich ist, um einen bestimmten Arbeitspunkt innerhalb des abzubildenden Dynamikbereiches überhaupt ansteuern zu können. Hierbei ist es von Vorteil, dass die Anordnung, zum Zwecke der dynamischen Dynamikbereich-Funktionsüberprüfung des Aufprall-Sensors 2 mit der Verarbeitungseinrichtung 3, Grenzwerte bzgl. des Nachregelverhaltens aufweist. Diese Grenzwerte können als ein mögliches Fehlerkriterium herangezogen werden, damit, sobald die Grenzwerte des Nachregelverhaltens über- oder unterschritten werden, eine Systemfehlermeldung generiert werden kann. Die hierbei anzuziehenden bzw. im Vorfeld festgelegten Grenzwerte beschreiben einen Regelstrombereich, in dem sich der Nachregelstrom eines funktionierenden Aufprall-Sensors 2 mit Verarbeitungseinrichtung 3 befinden muss.

Fig. 2 zeigt eine Detaildarstellung einer Ausführungsform der Signalverarbeitungseinrichtung 3.3. Hierbei wird der sich quasi-statisch einstellende und/oder vorliegende statische Arbeitspunkt 4.4 der Übertragungsstrecke 3.1, 2.2, 3.2 mit einem Soll-Arbeitspunkt 4.1 verglichen. Das Ergebnis des Vergleichs wird einer Vorrichtung zur Regelsignalerzeugung 4.2, die in diesem Beispiel als PWM-Ausgangsstufe realisiert ist, zugeführt, welche ein Regelsignal 4 generiert. Zur Generierung des Ansteuersignals für die Vorrichtung zur Regelsignalerzeugung 4.2 bzw. für die PWM-Ausgangsstufe dient eine Vorrichtung zur Regelung 4.5, die bei einer µP-Lösung auch als Algorithmus realisiert sein kann und die Eingangswerte der IST- und Ziel-Größen entsprechend verarbeitet. Hierbei kann die Regelung kontinuierlich bei einer analogen Implementierung oder abgetastet bei einer digitalen Implementierung erfolgen. Die Regelung erzeugt für aktuelle und ggf. vergangene Eingangswerte die Differenz zwischen Zielwert und Istwert. Aus der Differenz wird dann eine Stellgröße zur Ansteuerung der PWM gebildet.

Die Regelung umfasst wenigstens eine oder eine Kombination einer oder mehrerer der folgenden Funktionen oder Merkmale:
- Proportionalteil (Verstärkung / Skalierung)
- Integralanteil (Aufintegration und Skalierung vergangener Werte)
- Differentialanteil (Bestimmung der Werte-Änderung über der Zeit und Skalierung)
- Kennlinien

Während der Testphase kann mit Hilfe des Regelsignals 4 der sich quasi-statisch einstellende und/oder vorliegende statische Arbeitspunkt 4.4 der Übertragungsstrecke 3.1, 2.2, 3.2 über den gesamten Dynamikbereich der Übertragungsstrecke gesteuert werden.

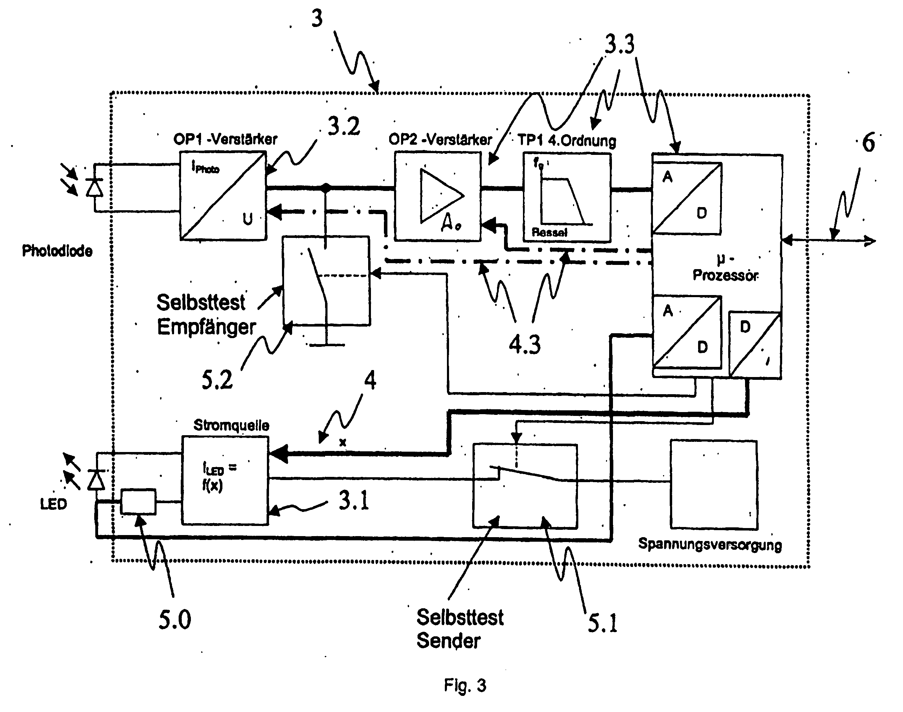

Fig. 3 zeigt eine Detaildarstellung einer Ausführungsform der Verarbeitungseinrichtung 3. Die Verarbeitungseinrichtung 3 ähnelt der bereits in Fig. 1 dargestellten und ist um Details ergänzt, die für Prüffunktionen und Verstärkungsfaktorsteuerungsmöglichkeiten vorgesehen sind. Mittels der Steuerleitungen 4.3 für die Verstärkungssteuerung, der beiden gezeigten Verstärkerstufen in der Empfangseinheit 3.2 und der Signalaufbereitungsschaltung 3.3 kann ein "Summen"-Verstärkungsfaktor für die sich in der Signalstrecke befindlichen Verstärkerschaltungen ermittelt und eingestellt werden, damit der Arbeitsbereich nach Kompensation der Störfaktoren, wie beispielsweise "Parkrempler", Bauteiletoleranzen, Alterung, Temperatur usw., optimal auf den Messbereichseingang beispielsweise eines A/D-Wandlers angepasst werden kann. Die Ermittlung und Einstellung des "Summen"-Verstärkungsfaktors hängt hierbei hauptsächlich von der ermittelten Übertragungsgüte des Aufprall-Sensors 2 ab.

Zur Ereichung des Ziels, dass der erforderliche Dynamikbereich optimal an den erforderlichen Arbeitsbereich angepasst werden kann, stehen somit diverse zu beeinflussende Stellgrößen zur Verfügung. Gemäß der Lösung der Erfindung wird die Sendeleistung der Sendeeinheit 3.1 und/oder der Verstärkungsfaktor der Empfangseinheit 3.2 und/oder der Verstärkungsfaktor der Signalaufbereitungsschaltung 3.3 abhängig von der Übertragungsgüte des Aufprall-Sensors 2 beeinflusst oder dadurch bestimmt.

Weiterhin zeigt die Fig. 3 eine Vorrichtung für einen Sender-Selbsttest 5.1. Die korrekte Funktion der Sendeeinheit 3.1 wird dadurch überprüft, dass mittels der Vorrichtung für den Sender-Selbsttest 5.1 die Energiezufuhr zur Sendereinheit 3.1 unterbrochen und anschließend geprüft wird, welcher Strom an der zur Sendeeinheit 3.1 dazugehörenden Sendestrom-Erfassungs-Vorrichtung 5.0 erfasst werden kann. In ähnlicher Weise kann auch die Empfangseinheit 3.2 sowie die Signalaufbereitungsschaltung 3.3. geprüft werden, indem mittels der Vorrichtung für den Empfänger-Selbsttest 5.2 in den Signalpfad ein definiertes Signal, vorzugsweise wie dargestellt ein 0-Volt-Signal-Pegel, eingeprägt wird.

Mittels einer gezielten Einprägung von Signal-Pegeln in den Signalpfad und Auswertung der resultierenden Signalamplituden können somit die Empfangseinheit und/oder die Verstärkungsstufen und/oder die Signalaufbereitungsschaltung 3.3 auf Funktionsfähigkeit geprüft werden.

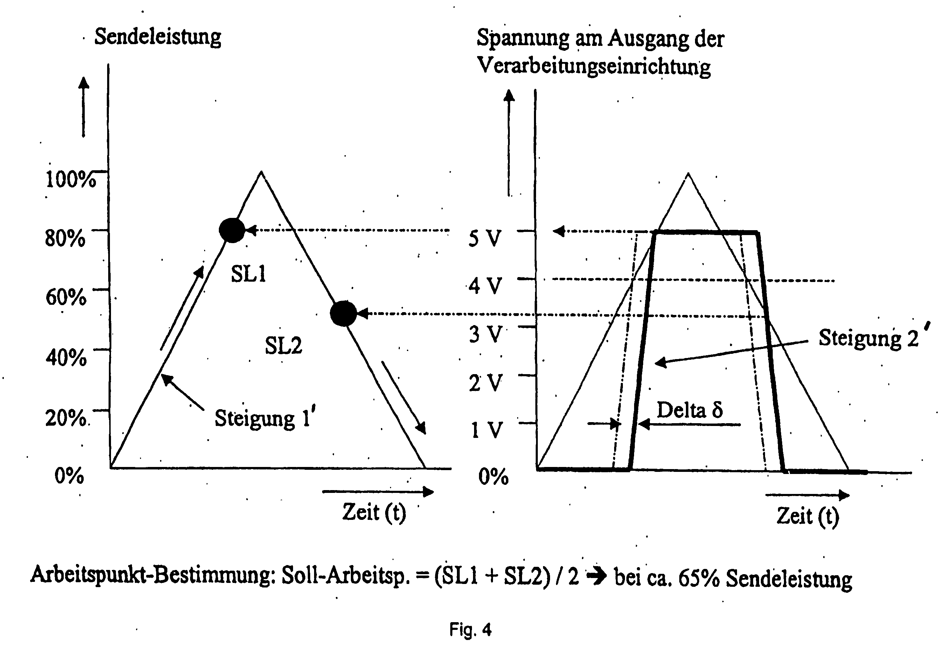

Fig. 4 zeigt eine Funktionsdarstellung der Soll-Arbeitspunkt-Bestimmung/Arbeitspunkt-Festlegung, sowie Erläuterung der Verfahren zum Betreiben, zur Überprüfung und zum Abgleich der Vorrichtung. In einem ersten Schritt des Verfahrens wird die Sendeleistung bestimmt, welche erforderlich ist, damit sich der quasi-statisch einstellende und/oder vorliegende statische Arbeitspunkt 4.4 auf den gewünschten vordefinierten Soll-Arbeitspunkt 4.1 einstellt oder sich zumindest zu diesem hinbewegt.

Die erforderliche Sendeleistung wird dadurch bestimmt, dass mittels einer rampenförmigen Steuerung der Senderleistung der Punkt ermittelt wird, bei dem sich der quasi-statisch einstellende und/oder vorliegende statische Arbeitspunkt 4.4 auf den gewünschten vordefinierten Soll-Arbeitspunkt 4.1 einstellt bzw. zu diesem hinbewegt. Infolge von zeitlichen Verzögerungen in der gesamten Übertragungsstrecke sollte hierzu die rampenförmige Steuerung der Senderleistung entsprechend mit einer geringen Steigung (langen Zeit) durchgeführt werden. Da jedoch in den meisten Fällen die zur Verfügung stehende Zeit begrenzt ist, sollte eine schnellere Rampe angewendet werden. Dieses hat zur Folge, dass es zu Laufzeitverzögerungen am Ausgang der Verarbeitungseinrichtung 3 kommt, wie in Fig. 4 durch den Phasenwinkelfehler Delta δ verdeutlicht ist. Um diesen Phasenwinkelfehler Delta δ zu eliminieren oder wenigstens zu minimieren, wird zur Bestimmung der erforderlichen Sendeleistung (damit sich der quasi-statisch einstellende und/oder vorliegende statische Arbeitspunkt 4.4 auf den gewünschten vordefinierten Soll-Arbeitspunkt 4.1 einstellt/bewegt) eine steigende und fallende rampenförmigen Steuerung der Senderleistung verwendet, um daraus die Hälfte der Summe der beiden Punkte zu ermitteln, bei der sich der quasi-statisch einstellende und/oder vorliegende statische Arbeitspunkt 4.4 jeweils auf den gewünschten vordefinierten Soll-Arbeitspunkt 4.1 einstellt oder zu diesem hinbewegt hat. Sofern sich der Phasenwinkelfehler Delta δ von der steigenden Rampe zur fallenden Rampe differenziert, sollte diese Eigenart bei der Ermittlung des statischen Arbeitspunktes 4.4 entsprechend noch berücksichtigt werden, z.B. dadurch, dass ein empirisch ermittelter Wert zusätzlich berücksichtigt wird. Das Rampenverfahren kann auch trotz vorhandener Nichtlinearitäten der Strecke (LED, Lichtleiter, Photodiode) zur Bestimmung einer Näherung zur Auffindung des optimalen Arbeitspunktes dienen.

Mittels der bekannten angelegten definierten Steigung 1' lässt sich eine Steigung 2' des Kurvenverlaufes des sich jeweils quasi-statisch einstellenden und/oder vorliegenden statischen Arbeitspunktes 4.4 unter Berücksichtigung der Verstärkungsfaktoren der Empfangseinheit 3.2 und der Signalaufbereitungsschaltung 3.3 ermitteln. Die Steigung 2 des Kurvenverlaufes stellt in Beziehung zur Steigung 1 eine Kenngröße für die Übertragungsgüte des Aufprall-Sensors 2 dar.

Zur Überprüfung und zum Abgleichen des Aufprall-Sensors 2 mit der Verarbeitungseinrichtung 3 werden, wie bereits in Zusammenhang mit Fig. 2 und der "dynamischen Dynamik-Funktionsüberprüfung des Aufprall-Sensors 2 mit der Verarbeitungseinrichtung 3" beschrieben, mittels einer beabsichtigten Steuerung des Ist-Arbeitspunktes 4.4 alle dynamisch überstreichend oder spezifische Arbeitspunkte aktiv angesteuert, die innerhalb den beiden zu erfüllenden Grenzwerten des erforderlichen Dynamikbereiches liegen. Vorteilhafterweise wird bei dieser Überprüfung jedoch nicht nur der Bereich der innerhalb des Dynamikbereiches liegenden Arbeitspunkte abgeprüft, sondern darüber hinaus aus Sicherheitsgründen auch noch ein Sicherheits- oder Reservebereich der Dynamikfähigkeit mitberücksichtigt, so dass die dynamische Dynamikbereich-Funktionsüberprüfung des Aufprall-Sensors 2 mit Verarbeitungseinrichtung 3 durch eine beabsichtigte Steuerung des Soll-Arbeitspunktes auch über die Grenzen des zu erfüllenden Dynamikbereiches hinaus in den Reserve-Bereich / Sicherheitsbereich erfolgt.

Für die Überprüfung bzw. für den Abgleich ist es von untergeordneter Bedeutung, ob hierbei das dynamische Überstreichen über den erforderlichen Dynamikbereich mit einem kontinuierlichen Verlauf oder in einen stufenförmigen Verlauf mit gleichen oder ungleichen Schritten erfolgt.

Hierbei ist es von Vorteil, dass die Anordnung, zum Zwecke der Überprüfung bzw. des Abgleichs des Aufprall-Sensors 2 mit der Verarbeitungseinrichtung 3, Grenzwerte bzgl. des zulässigen Steuerverhaltens aufweist. Diese Grenzwerte können als ein mögliches Fehlerkriterium herangezogen werden, damit, sobald die Grenzwerte des zulässigen Steuerverhaltens überschritten oder unterschritten werden, eine Systemfehlermeidung generiert werden kann. Die hierbei anzuziehenden bzw. im Vorfeld festgelegten Grenzwerte beschreiben einen Regelbereich, in dem sich die Regelgröße eines funktionierenden Aufprall-Sensors 2 mit Verarbeitungseinrichtung 3 befinden sollte.

Aufgrund der somit ermittelten Größen lässt sich der Aufprall-Sensor 2 mit Verarbeitungseinrichtung 3 nach Berücksichtigung aller Einstellfaktoren in einem gewünschtem Soll-Arbeitspunktbereich betreiben, in dem eine optimale Anpassung bzw. eine maximale Nutzung des Aussteuerbereiches für das dynamische zu erfassende Nutzsignal gewährleistet ist.

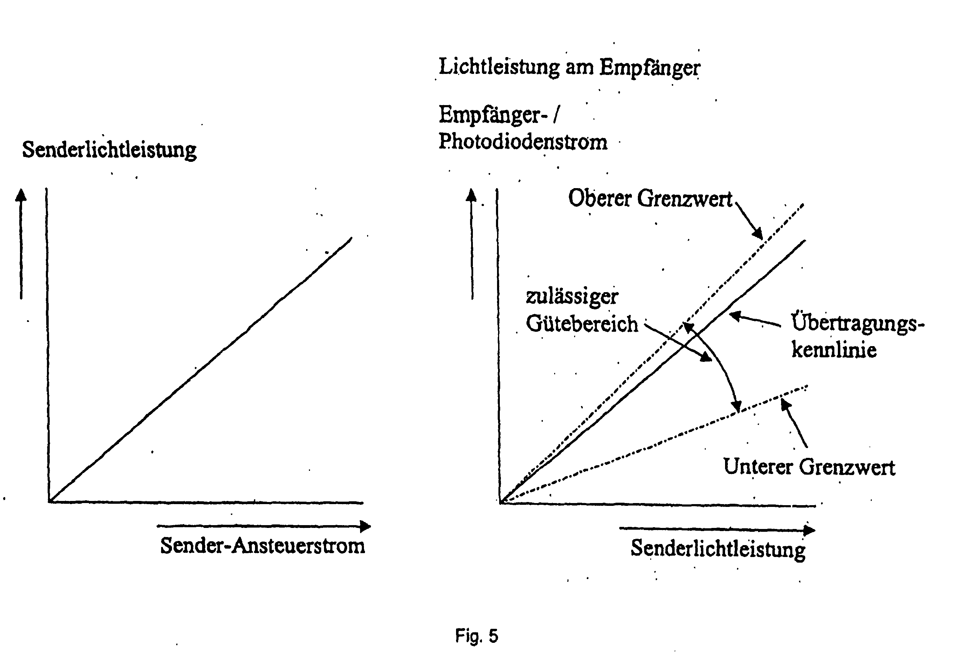

Fig. 5 zeigt eine Funktionsdarstellung der Übertragungsgüte, bzw. dem Übertragungsverhältnis der Ausgangsgröße zur Eingangsgröße.

Wie in der linken Darstellung ohne Berücksichtigung div. Nichtlinearitäten der Bauteile idealisiert dargestellt ist, folgt die Senderlichtleistung gemäß dem Sender-Ansteuerstrom, bzw. stehen Sender-Ansteuerstrom und Senderlichtleistung zueinander in einer festen Beziehung. Die rechte Darstellung in Fig. 5 zeigt wiederum idealisiert die Beziehung zwischen der Lichtleistung am Empfänger bzw. dem Empfänger- / Photodiodenstrom und der Senderlichtleistung. Wie daraus ersichtlich ist, stehen die Übertragungskennlinie / das Übertragungsverhältnis der Sendeeinheit zur Empfangseinheit, bzw. die Sendeansteuerungskennlinie und Empfängerkennlinie zueinander bzgl. des Kurvenverlaufs in einer vordefinierten Beziehung. Diese vordefinierte Beziehung kann als ein mögliches Fehlerkriterium herangezogen werden, damit, sobald der vordefinierte zulässige Beziehungsbereich überschritten oder unterschritten wird, eine Systemfehlermeldung generiert werden kann. Die vordefinierte Beziehung, bzw. der vordefinierte Beziehungsbereich stellt ein Maß für die Übertragungsgüte dar, die es einzuhalten gilt, damit eine ordnungsgemäße Funktion des Aufprall-Sensors 2 mit Verarbeitungseinrichtung 3 sicher gewährleistet werden kann. Aus dem Ergebnis, mittels der in der Vorrichtung 1 ermittelten Beziehung, bzw. von der Kennlinie der vordefinierten Beziehung, welche ein Maß für die Dämpfung des Aufprall-Sensors 2 mit der Verarbeitungseinrichtung 3 ist, lässt sich die Dämpfung bestimmen / ableiten.

Die Steigung der Übertragungskennlinie, welche die vorhandene Übertragungsgüte/Dämpfung des Aufprall-Sensors 2 mit der Verarbeitungseinrichtung 3 beschreibt, kann mittels einer regelbaren Verstärkerstufen kompensiert / beeinflusst werden. Da die Sendeansteuerungskennlinie und Kompensationskennlinie des Eingangsverstärkers zueinander bzgl. des Kurvenverlaufs in einer vordefinierten Beziehung stehen / stehen sollen, bietet es sich auch hierbei wieder an, dass die vordefinierte Beziehung als ein mögliches Fehlerkriterium herangezogen wird, damit, sobald ein vordefinierter zulässiger Beziehungsbereich überschritten oder unterschritten wird, eine Systemfehlermeldung generiert wird.

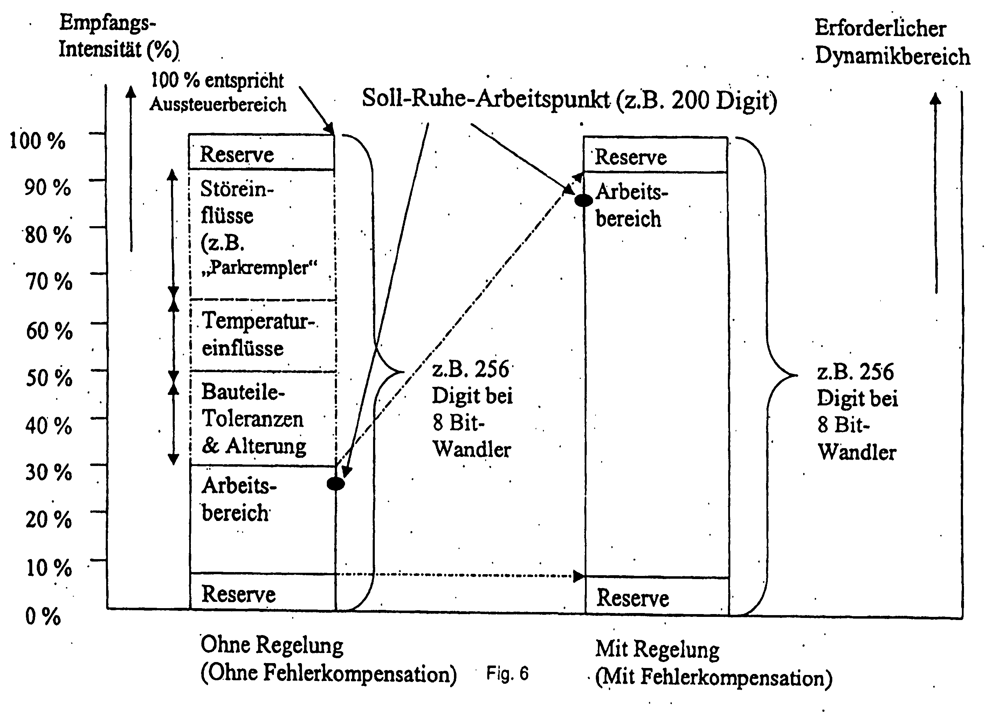

Fig. 6 zeigt eine Darstellung des erforderlichen Dynamikbereiches anhand der zu berücksichtigenden Größen im Aussteuerbereich. Die Fig. zeigt eine Verbesserung der Auflösung der Nutzsignalanteile im vorzuhaltendem Dynamikbereich für die Übertragungsstrecke aufgrund der erfindungsgemäßen Regelung. Die Darstellung zeigt den erforderlichen Dynamikbereich, bzw. die abzubildenden darzustellenden Bereiche / Einflussfaktoren, die zu berücksichtigen sind, bzw. welche im zur Verfügung stehenden Auflösungsbereich z.B. 8-Bit zu berücksichtigen / abzubilden sind.

Ohne Regelung ohne Fehlerkompensation müsste die Vorrichtung 1 derart dimensioniert bzw. ausgelegt werden, dass im zu erfassenden / abzubildenden Dynamikbereich, z.B. 256 Digit bei einem 8 Bit-Wandler, alle Größen berücksichtigt sind, damit zu jeder Zeit sichergestellt werden kann, dass der sich von Störgrößen abhängig einstellende Arbeitspunkt sich immer im Erfassungsbereich des Wandlers befindet. Hierbei müssten, neben dem Arbeitsbereich, zusätzlich die in der Vorrichtung vorhandenen Bauteiltoleranzen, Fertigungstoleranzen, Alterungseffekte, Temperatureinflüsse, Sicherheits- / Reservebereiche, Störeinflüsse wie beispielsweise "Parkrempler", die eine bleibende Verformung zur Folge haben, usw. berücksichtigt werden. Besonders die erwähnten "Parkrempler" haben einen großen Einfluss auf die Übertragungseigenschaften des zweiten Teils 2.2, da der Arbeitspunkt wie dargestellt (alle Störgrößen aktiv / dämpfend) infolge der sich daraus ergebenden reduzierten Lichtmenge bzw. des sich daraus ergebenden erhöhten Widerstandswertes deutlich nach unten verschoben, wird. Somit verbleibt für den Arbeitsbereich nur noch ein geringer Dynamikbereich. Je kleiner der verbleibende Dynamikbereich wird, desto unempfindlicher und ungenauer kann eine Änderung an Lichtdurchlässigkeit bzw. des Widerstands des Aufprall-Sensors 2, beispielsweise infolge eines Personenkontaktes, sensiert werden.

Der besseren Verständlichkeit sei hier angeführt, dass die Einwirkung einer Kraft oder eines Druckes auf den Aufprall-Sensor 2 die Lichtleiteigenschaften im Falle eines Lichtleiters infolge des entstehenden Streulichtes negativ beeinflusst. Dies hat zur Folge, dass am Empfangsteil eine schwächere Lichtleistung empfangen wird und sich demzufolge das auszuwertende Nutzsignal dem Ruhepotential negativ überlagert, so dass sich der Ruhearbeitspunkt zu geringeren Werten hin verschiebt. Im Falle eines Widerstandssensors bzw. einer ohmschen Widerstandsanordnung als Aufprall-Sensor ist die analoge Verschiebung hierbei prinzipabhängig und führt zu einer Erhöhung des Widerstandes bzw. Erniedrigung des Leitwertes. Mit der Regelung kann hingegen der sich einstellende Arbeitspunkt derart verschoben werden bzw. mit einer Art Offset überlagert werden, dass sich der Ruhe-Arbeitpunkt nach der Berücksichtigung und Kompensation der störenden Einflussgrößen in einem Bereich befindet, welcher vom A/D-Wandler relativ gut aufgelöst werden kann, so dass sich daraus eine hohe Nutzsignalempfindlichkeit ergibt. Mittels der beschriebenen kontinuierlichen Nachregelung / Nachführung des sich quasi-statisch einstellenden und/oder des vorliegenden statischen Arbeitspunktes der Überragungsstrecke können somit auch langsame sich ständig ändernde Störeinflüsse kompensiert werden.

Die Kompensation und die optimale Anpassung (Zoom) des Arbeitsbereiches an den A/DWandler-Bereich erfolgt im ersten Schritt über eine Einstellung der Sendeleistung der Sendeeinheit 3.1, welche eine kompensierende Wirkung hinsichtlich der Übertragungsgüte-Einflussgrößen des Aufprall-Sensors 2 hat, indem ein Soll-Ruhearbeitspunkt der Übertragungsstrecke angesteuert wird. Anschließend wird im zweiten Schritt die Kompensation und die optimale Anpassung (Zoom) über den Verstärkungsfaktor der Empfangseinheit 3.2 und/oder der Signalaufbereitungsschaltung 3.3 vorgenommen, welcher eine kompensierende Wirkung hinsichtlich des Übertragungsgüte-Faktors bzw. der Steigung/des Linearitätsfaktors (Zoom-Faktors) des Aufprall-Sensors 2 aufweist. Im Falle eines Widerstandssensors bzw. einer ohmschen Widerstandsanordnung ist unter dem Begriff der "Sendeleistung" die angelegte Spannung bzw. der eingeprägte Strom zu verstehen.

Ein weiterer sich daraus ergebender Vorteil besteht darin, dass neben den bereits erwähnten Störgrößen die Fertigungstoleranzen, die bei der Herstellung des Aufprall-Sensors 2 auftreten können, mittels der Verarbeitungseinrichtung 3 mit einfachsten Mitteln kompensiert werden können. Zur Kompensation oder zum Abgleichen der Stör- und/oder Einflussgrößen sowie zur Überprüfung des Aufprall-Sensors 2 mit Verarbeitungseinrichtung 3 werden vorteilhafterweise die gleichen Verfahren bzw. die darin enthaltenen Funktionsprinzipien angewandt, die zum Betreiben des Aufprall-Sensors 2 mit Verarbeitungseinrichtung 3 erforderlich sind und die in der vorangegangen Figurenbeschreibungen erläutert wurden.

### Bezugszeichen

- 1: Aufprall-Sensorvorrichtung
- 2: Aufprall-Sensor
- 2.1: erstes Fahrzeugaußenhautteil (Stoßstange im Frontbereich eines Kraftfahrzeugs)
- 2.2: kraft- / druckempfindlicher zweiter Teil (Lichtwellenleiter)
- 3: Verarbeitungseinrichtung
- 3.1: Sendeeinheit/einstellbare Stromquelle
- 3.2: Empfangseinheit/Verarbeitungsmittel
- 3.3: Signalaufbereitungsschaltung
- 4: Regelsignal/Stell-Größe
- 4.1: Soll-Arbeitspunkt/Soll-Größe
- 4.2: Vorrichtung zur Regelsignalerzeugung
- 4.3: Steuerleitungen für Verstärkungssteuerung
- 4.4: statischer Arbeitspunkt/Ist-Größe
- 4.5: Vorrichtung zur Regelung/Regelalgorithmus
- 5.0: Sendestrom-Erfassungs-Vorrichtung
- 5.1: Vorrichtung für Sender-Selbsttest
- 5.2: Vorrichtung für Empfänger-Selbsttest
- 6: Schnittstelle zu. einer Kraftfahrzeug-Sicherheitseinrichtung

## Patentansprüche

1. Aufprall-Sensorvorrichtung (1) mit
einem kraft- oder druckempfindlichen Aufprall-Sensor (2) und
einer Verarbeitungseinrichtung (3), die Ansteuermittel (3.1) für den Aufprall-Sensor (2) und Verarbeitungsmittel (3.2) für ein Signal des Aufprall-Sensors (2) aufweist,
wobei die Verarbeitungseinrichtung (3) ferner eine Regelung zum Einstellen des statischen Ist-Arbeitspunktes (4.4) der Aufprall-Sensorvorrichtung (1) auf einen Soll- Arbeitspunktes (4.1) aufweist
**dadurch gekennzeichnet, dass**
die Regelung ferner eine dynamische Funktionsüberprüfung des Dynamikbereichs der Aufprall-Sensorvorrichtung (1) implementiert, indem eine Steuerung des mindestens einen in der Regelung implementierten Soll-Arbeitspunktes innerhalb des zu erfüllenden Dynamikbereiches vorgesehen ist.

2. Aufprall-Sensorvorrichtung nach Anspruch 1,
**dadurch gekennzeichnet, dass**
zur dynamischen Funktionsüberprüfung des Dynamikbereichs der Aufprall-Sensorvorrichtung (1) die Sendeleistung entlang einer Rampe entlang einer steigenden und einer abfallenden Flanke gesteuert, jeweils die Spannung am Ausgang der Verarbeitungsvorrichtung erfasst und jeweils mit dem Soll-Arbeitspunkt (4.1) vergleichen wird, jeweils die Sendeleistung (SL1, SL2) bei Erreichen des Soll-Arbeitspunktes (4.1) bei der steigenden und fallenden Flanke ermittelt und daraus die Hälfte der Summe der Sendeleistungen jeweils bei Erreichen des Soll-Arbeitspunktes ermittelt und der statische Arbeitspunkt (4.4) nachfolgend entsprechend eingestellt wird.

3. Aufprall-Sensorvorrichtung nach Anspruch 2,
**dadurch gekennzeichnet, dass**
der mindestens eine Soll-Arbeitspunkt (4.1) bei etwa 70% bis etwa 90% eines möglichen Aussteuerbereichs der Verarbeitungseinrichtung (3) liegt.

4. Aufprall-Sensorvorrichtung nach Anspruch 1, 2 oder 3,
**dadurch gekennzeichnet, dass**
der Aufprall-Sensor (2) einen Lichtwellenleiter, die Ansteuermittel (3.1) eine Lichtquelle, insbesondere eine Leucht- oder Laserdiode, und eine einstellbare Stromquelle (3.1) zum Speisen der Lichtquelle sowie die Verarbeitungsmittel (3.2) eine Photodiode umfassen.

5. Aufprall-Sensorvorrichtung nach Anspruch 4,
**dadurch gekennzeichnet, dass**
die Verarbeitungseinrichtung (3) eine Signalaufbereitungsschaltung (3.3) zum Verarbeiten des Ausgangssignals der Photodiode und davon abhängigen Erzeugen eines Regelsignals (4) aufweist, wobei die Signalaufbereitungsschaltung (3.3) derart ausgebildet ist, dass sie ein Regelsignal (4) zum Steuern der einstellbaren Stromquelle (3.1) abhängig vom mindestens einen Soll-Arbeitspunkt (4.1) erzeugen kann.

6. Aufprall-Sensorvorrichtung nach Anspruch 5,
**dadurch gekennzeichnet, dass**
die Signalaufbereitungsschaltung (3.3) derart ausgebildet ist, dass sie das Ausgangssignal der Photodiode mittelt, um die empfangene Lichtleistung zu ermitteln, und gemäß einer vorgegebenen Kennlinienfunktion das Regelsignal (4) erzeugt.

7. Aufprall-Sensorvorrichtung nach Anspruch 4,
**dadurch gekennzeichnet, dass**
die Verarbeitungseinrichtung (3) derart ausgebildet ist, dass sie die Sendeleistung der Lichtquelle, den Verstärkungsfaktor eines Verstärkers für den Photodiodenstrom und/oder den Verstärkungsfaktor einer Signalaufbereitungsschaltung (3.3) abhängig von der Übertragungsgüte des Aufprall-Sensors (2) einstellt.

8. Aufprall-Sensorvorrichtung nach einem der vorhergehenden Ansprüche,
**dadurch gekennzeichnet, dass**
die Regelung des Einstellens des Arbeitspunktes (4.4) mit einer Frequenz betrieben ist, die niedriger ist als die Frequenz des Signals des Aufprall-Sensors (2).

9. Aufprall-Sensorvorrichtung nach einem der vorhergehenden Ansprüche,
**dadurch gekennzeichnet, dass**
die Regelung des Einstellens des Arbeitspunktes (4.4) mit einer Frequenz betrieben ist, die höher ist als die Frequenz des Signals des Aufprall-Sensors (2).

10. Aufprall-Sensorvorrichtung nach einem der vorhergehenden Ansprüche,
**dadurch gekennzeichnet, dass**
die Regelung des Einstellens des Arbeitspunktes (4.4) zu vorgegebenen Zeitpunkten, und/oder kontinuierlich während des Betriebs erfolgt.

11. Aufprall-Sensorvorrichtung nach einem der vorhergehenden Ansprüche,
**dadurch gekennzeichnet, dass**
die vorgegebenen Zeitpunkte in einem Zeitraum liegen, in dem ein Selbsttest der Aufprall-Sensorvorrichtung (1) stattfindet.

12. Aufprall-Sensorvorrichtung nach einem der vorhergehenden Ansprüche,
**dadurch gekennzeichnet, dass**
die Regelung ferner eine dynamische Dynamik-Funktionsüberprüfung der Aufprall-Sensorvorrichtung (1) implementiert.

13. Aufprall-Sensorvorrichtung nach Anspruch 12,
**dadurch gekennzeichnet, dass**
die dynamische Dynamik-Funktionsüberprüfung durch eine vorgegebene Steuerung des mindestens einen in der Regelung implementierten Soll-Arbeitspunktes innerhalb von Grenzwerten eines vorgegebenen Dynamikbereichs implementiert ist.

14. Aufprall-Sensorvorrichtung nach Anspruch 13,
**dadurch gekennzeichnet, dass**
die vorgegebene Steuerung derart ausgebildet ist, dass der mindestens eine Soll-Arbeitspunkt auch über die Grenzwerte des erforderlichen Dynamikbereichs ausgesteuert werden kann.

15. Aufprall-Sensorvorrichtung nach einem der vorhergehenden Ansprüche,
**dadurch gekennzeichnet, dass**
in der Regelung Fehler-Grenzwerte implementiert sind und die Aufprall-Sensorvorrichtung (1) derart ausgebildet ist, dass bei Überschreiten eines der implementierten Fehler-Grenzwerte durch die Regelung des statischen Arbeitspunktes (4.4) eine Fehlermeldung erzeugt wird.

16. Fußgängerschutzsystem für ein Fahrzeug, das mindestens ein in einem Außenbereich des Fahrzeugs wirkendes Schutzmittel und ein Steuergerät zum Ansteuern des mindestens einen Schutzmittels umfasst,
**dadurch gekennzeichnet, dass**
es ferner eine Aufprall-Sensorvorrichtung (1) nach einem der vorhergehenden Ansprüche aufweist, die mit dem Steuergerät kommunikationsmäßig verbunden ist.

17. Fahrzeug, insbesondere Personen- oder Lastkraftwagen,
**gekennzeichnet durch**
ein Fußgängerschutzsystem nach Anspruch 16.

## Claims

1. Impact sensor apparatus (1) with a force sensitive or pressure sensitive impact sensor (2) and a processing device (3), said processing device (3) comprising drive means (3.1) for the impact sensor (2) and processing means (3.2) for a signal of the impact sensor (2),
wherein the processing device (3) also comprises an automatic control for adjusting the quiescent actual operating point (4.4) of the impact sensor apparatus (1) to a set operating point (4.1),
**characterized in**
**that** the automatic control also implements a dynamic operational test of the volume range of the impact sensor apparatus (1) by providing, within the required volume range, a control of the at least one set operating point implemented in the automatic control.

2. Impact sensor apparatus according to claim 1,
**characterized in**
**that** for implementing the dynamic operational test of the volume range of the impact sensor apparatus (1), the transmitting power is controlled along a ramp along a positive-going and a negative-going edge, the voltage is detected at the output of the processing device and compared with the set operating point (4.1) in each case, the transmitting power (SL1, SL2) is determined in each case when reaching the set operating point (4.1) on the positive-going and negative-going edges and in each case half the sum of the transmitting powers is determined from that when reaching the set operating point and the quiescent operating point (4.4) is adjusted correspondingly after that.

3. Impact sensor apparatus according to claim 2,
**characterized in**
**that** the at least one set operating point (4.1) is between approximately 70% and approximately 90% of a possible dynamic range of the processing device (3).

4. Impact sensor apparatus according to claim 1, 2 or 3,
**characterized in**
**that** the impact sensor (2) comprises an optical waveguide, the drive means (3.1) comprise a light source, in particular a light emitting or laser diode, and an adjustable power source (3.1) for supplying the light source, and the processing means (3.2) comprise a photodiode.

5. Impact sensor apparatus according to claim 4,
**characterized in**
**that** the processing device (3) comprises a signal processing circuit (3.3) for processing the output signal of the photodiode and generating a signal for automatic control (4), said generation being dependent on the processing of said output signal, wherein the signal processing circuit (3.3) is configured in such a manner that it can generate, depending on the at least one set operating point (4.1), a signal for automatic control (4) for controlling the adjustable power source (3.1).

6. Impact sensor apparatus according to claim 5,
**characterized in**
**that** the signal processing circuit (3.3) is configured in such a manner that it takes the mean of the output signal of the photodiode in order to determine the received luminous power and generates the signal for automatic control (4) according to a predetermined characteristic function.

7. Impact sensor apparatus according to claim 4,
**characterized in**
**that** the processing device (3) is configured in such a manner that it adjusts, depending on the transmission performance of the impact sensor (2), the transmitting power of the light source, the amplification of an amplifier for the photodiode current and/or the amplification of a signal processing circuit (3.3).

8. Impact sensor apparatus according to any one of the preceding claims,
**characterized in**
**that** the adjustment of the operating point (4.4) is controlled automatically at a frequency that is lower than the frequency of the signal of the impact sensor (2).

9. Impact sensor apparatus according to any one of the preceding claims,
**characterized in**
**that** the adjustment of the operating point (4.4) is controlled automatically at a frequency that is higher than the frequency of the signal of the impact sensor (2).

10. Impact sensor apparatus according to any one of the preceding claims,
**characterized in**
**that** the adjustment of the operating point (4.4) is controlled automatically at predetermined instants and/or continuously during operation.

11. Impact sensor apparatus according to any one of the preceding claims,
**characterized in**
**that** the predetermined instants lie in a period of time in which a self-test of the impact sensor apparatus (1) takes place.

12. Impact sensor apparatus according to any one of the preceding claims,
**characterized in**
**that** the automatic control also implements a dynamic operational test of the dynamic response of the impact sensor apparatus (1).

13. Impact sensor apparatus according to claim 12,
**characterized in**
**that** the dynamic operational test of the dynamic response is implemented within limits of a predetermined volume range by a predetermined control of the at least one set operating point implemented in the automatic control.

14. Impact sensor apparatus according to claim 13,
**characterized in**
**that** the predetermined control is configured in such a manner that the at least one set operating point can also be driven beyond the limits of the required volume range.

15. Impact sensor apparatus according to any one of the preceding claims,
**characterized in**
**that** error limits are implemented in the automatic control and the impact sensor apparatus (1) is configured in such a manner that an error message is generated if the automatic control of the quiescent operating point (4.4) exceeds any of the implemented error limits.

16. Pedestrian protection system for a vehicle, said system comprising at least one protection means acting in an external portion of the vehicle and a control device for driving the at least one protection means,
**characterized in**
**that** the system also comprises an impact sensor apparatus (1) according to any one of the preceding claims that communicates with the control device.

17. Vehicle, in particular passenger cars or motor lorries,
**characterized by**
a pedestrian protection system according to claim 16.

## Revendications

1. Dispositif à senseur de choc (1) avec
un senseur de choc (2) sensible aux efforts ou à la pression et un dispositif de traitement (3) présentant des moyens de commande (3.1) pour le senseur de choc (2) et des moyens de traitement (3.2) pour un signal du senseur de choc (2),
où le dispositif de traitement (3) comporte en outre une régulation pour l'ajustement à un point de fonctionnement de consigne (4.1) du point de fonctionnement statique effectif (4.4) du dispositif à senseur de choc (1),
**caractérisé en ce que**
la régulation implémente en outre un contrôle de fonctionnement dynamique de la plage dynamique du dispositif à senseur de choc (1), une commande d'au moins un point de fonctionnement de consigne implémenté dans la régulation étant prévu à l'intérieur de la plage dynamique à remplir.

2. Dispositif à senseur de choc selon la revendication 1,
**caractérisé en ce que**
pour le contrôle de fonctionnement dynamique de la plage dynamique du dispositif à senseur de choc (1), la puissance d'émission est commandée le long d'une rampe le long d'un flanc ascendant et d'un flanc descendant, la tension à la sortie du dispositif de traitement étant saisie et comparée avec le point de fonctionnement de consigne (4.1), la puissance d'émission (SL1, SL2) étant déterminée pour le flanc ascendant et le flanc descendant lorsque le point de fonctionnement de consigne (4.1) est atteint, la moitié de la somme des puissances d'émission étant réglée lorsque le point de fonctionnement de consigne est déterminé et le point de fonctionnement statique effectif (4.4) étant réglé consécutivement en conséquence.

3. Dispositif à senseur de choc selon la revendication 2,
**caractérisé en ce que**
le point de fonctionnement de consigne (un au moins) (4.1) est compris entre 70 % et 90 % environ d'une plage de commande possible du dispositif de traitement (3).

4. Dispositif à senseur de choc selon la revendication 1, 2 ou 3,
**caractérisé en ce que**
le senseur de choc (2) comprend un guide d'ondes lumineuses, les moyens de commande (3.1) une source lumineuse, notamment une diode électroluminescente ou laser, et une source de courant réglable (3.1) pour l'alimentation de la source lumineuse, et **en ce que** les moyens de traitement (3.2) comprennent une photodiode.

5. Dispositif à senseur de choc selon la revendication 4,
**caractérisé en ce que**
le dispositif de traitement (3) présente un circuit de traitement de signal (3.3) pour le traitement du signal de sortie de la photodiode et la génération qui en découle d'un signal de régulation (4), le circuit de traitement de signal (3.3) étant configuré de manière à pouvoir générer un signal de régulation (4) pour la commande de la source de courant réglable (3.1) en fonction d'un point de fonctionnement de consigne (4.1) au moins.

6. Dispositif à senseur de choc selon la revendication 5,
**caractérisé en ce que**
le circuit de traitement de signal (3.3) est configuré de manière à pouvoir établir la moyenne du signal de sortie de la photodiode pour déterminer la puissance lumineuse reçue, et **en ce qu'**il génère le signal de régulation (4) suivant une fonction caractéristique prescrite.

7. Dispositif à senseur de choc selon la revendication 4,
**caractérisé en ce que**
le dispositif de traitement (3) est formé de manière à régler la puissance d'émission de la source lumineuse, le facteur d'amplification d'un amplificateur pour le courant de photodiode et/ou le facteur d'amplification d'un circuit de traitement de signal (3.3) en fonction de la qualité de transmission du senseur de choc (2).

8. Dispositif à senseur de choc selon l'une des revendications précédentes,
**caractérisé en ce que**
la régulation d'ajustement du point de fonctionnement (4.4) est réalisée avec une fréquence inférieure à la fréquence du signal du senseur de choc (2).

9. Dispositif à senseur de choc selon l'une des revendications précédentes,
**caractérisé en ce que**
la régulation d'ajustement du point de fonctionnement (4.4) est réalisée avec une fréquence supérieure à la fréquence du signal du senseur de choc (2).

10. Dispositif à senseur de choc selon l'une des revendications précédentes,
**caractérisé en ce que**
la régulation d'ajustement du point de fonctionnement (4.4) est exécutée à des moments prescrits, et/ou de manière continue en cours de service.

11. Dispositif à senseur de choc selon l'une des revendications précédentes,
**caractérisé en ce que**
les moments prescrits sont compris dans une période où est exécuté un test automatique du dispositif à senseur de choc (1).

12. Dispositif à senseur de choc selon l'une des revendications précédentes,
**caractérisé en ce que**
la régulation présente en outre un contrôle de fonctionnement dynamique de la plage dynamique du dispositif à senseur de choc (1).

13. Dispositif à senseur de choc selon la revendication 12,
**caractérisé en ce que**
le contrôle de fonctionnement dynamique de la plage dynamique du dispositif à senseur de choc (1) est implémenté par une commande prescrite d'au moins un point de fonctionnement de consigne implémenté dans la régulation, dans les valeurs limites d'une plage dynamique prescrite.

14. Dispositif à senseur de choc selon la revendication 13,
**caractérisé en ce que**
la commande prescrite est formée de manière que le point de fonctionnement de consigne (un au moins) puisse également être commandé au-dessus des valeurs limites de la plage dynamique exigée.

15. Dispositif à senseur de choc selon l'une des revendications précédentes,
**caractérisé en ce que**
des valeurs limites d'erreur sont implémentées dans la régulation et **en ce que** le dispositif à senseur de choc (1) est formé de manière à ce qu'un message d'erreur soit généré en cas de dépassement d'une des valeurs limites d'erreur implémentées par la régulation du point de fonctionnement statique (4.4).

16. Système de protection des piétons pour un véhicule comprenant au moins un moyen de protection efficace à l'extérieur du véhicule et un appareil de commande pour la commande d'un moyen de protection au moins,
**caractérisé en ce que**
ledit système présente en outre un dispositif à senseur de choc (1) selon l'une des revendications précédentes, relié à l'appareil de commande pour permettre une communication.

17. Véhicule, notamment voiture ou véhicule poids lourd,
**caractérisé par**
un système de protection des piétons selon la revendication 16.
